# EUROPÄISCHE PATENTSCHRIFT

(11) **EP 0 568 713 B1**
(45) Veröffentlichungstag und Bekanntmachung des Hinweises auf die Patenterteilung: **27.03.1996**
(21) Anmeldenummer: 92107549.5
(22) Anmeldetag: 05.05.1992
(51) Int. Cl.: B01J 19/24, F28F 9/00

(54) **Stützrost für Rohrbündel**
Support grid for a tube bundle
Grille de support pour faisceau de tubes

(43) Veröffentlichungstag der Anmeldung: 10.11.1993
(73) Patentinhaber: DEGGENDORFER WERFT UND EISENBAU GMBH, D-94469 Deggendorf (DE)
(72) Erfinder: Kramer Rudolf, W-8354 Metten (DE); Gütlhuber FriedrichDipl. Ing.FH, W-8354 Metten (DE); Brandl Ludwig, W-8360 Deggendorf (DE)
(74) Vertreter: Bauer, Robert, Dipl.-Ing.

(56) Entgegenhaltungen:
- DE-C- 950 905
- FR-A- 1 573 762
- US-A- 4 204 305

## Beschreibung

Die Erfindung betrifft einen Stützrost für Rohrbündel gemäß Gattungsbegriff des Anspruchs 1.

Derartige Stützroste finden Verwendung beispielsweise in verhältnismäßig langgestreckten Rohrbündelreaktoren für die Durchführung wärmegetönter chemischer Reaktionen. Dabei kommt es darauf an, die einzelnen Rohre sowohl gegenseitig wie auch gesamtheitlich gegenüber dem Reaktormantel abzustützen. Während man bei gedrungeneren Rohrbündelreaktoren den die Reaktionswärme zu- bzw. abführenden Wärmeträger vermittels Umlenkscheiben oder dergl. im wesentlichen im Querstrom durch das Rohrbündel hindurchführt, sucht man bei verhältnismäßig langgestreckten Rohrbündelreaktoren zumeist, den Wärmeträger möglichst ungehindert in Längsrichtung an den Rohren entlangzuführen. Dementsprechend sollen die hier erforderlichen Stützroste bei ausreichender Festigkeit einen möglichst großen spezifischen Durchtrittsquerschnitt für den Wärmeträger besitzen, und zwar im Bereich eines jeden Rohres.

Dem suchte man bislang gewöhnlich durch einen Stützrost aus einander kreuzenden Scharen geradliniger, zwischen den einzelnen Rohrzeilen hindurchgeführter und durch seitliche Vorsprünge, Aussparungen oder dergl. letztlich miteinander verbundener Stäbe Rechnung zu tragen. Eine andere Lösung bestand darin, auf die einzelnen Rohre Hülsen aufzusetzen und diese durch dazwischen eingeschweißte kurze Stäbe miteinander zu verbinden. Beide Lösungen sind indessen sehr arbeitsaufwendig und bei Rohrbündeln mit sehr zahlreichen, dicht beieinander angeordneten Rohren kaum noch zu verwirklichen.

Aus der Schrift FR-A-1 573 762 ist des weiteren bereits ein Stützrost für Rohrbündel mit den Merkmalen des Gattungsbegriffs des Patentanspruchs 1 bekannt, bei dem jeweils zwei aufeinanderliegende, mit gegenüber dem Rohraußendurchmesser überdimensionierten kreiszylindrischen Bohrungen versehene Scheiben derart parallel gegeneinander verschoben sind, daß die Rohre seitens der Bohrungswände der beiden Scheiben wie in einer Schere eingeklemmt werden. Ein solcher Stützrost ist zwar verhältnismäßig einfach und arbeitssparend unter Verwendung eines Bohrwerks herzustellen, jedoch bietet er nur recht begrenzte Durchtrittsquerschnitte für den Wärmeträger.

Von daher liegt der Erfindung die Aufgabe zugrunde, einen Stützrost mit den Merkmalen des Gattungsbegriffs so auszubilden, daß er bei leichter Herstellbarkeit und guter Festigkeit ähnlich große Durchtrittsquerschnitte für den Wärmeträger bietet wie etwa die weiter oben angegebenen herkömmlichen Stützroste aus einander kreuzenden Stäben.

Diese Aufgabe ist erfindungsgemäß durch einen Stützrost mit den Merkmalen des Anspruchs 1 gelöst. Die Unteransprüche geben vorteilhafte Ausgestaltungsmöglichkeiten des betreffenden Stützrostes an.

Während der betreffende Stützrost ähnlich einfach mit Hilfe eines Bohrwerks aus Stahlplatten herstellbar ist wie derjenige nach der vorgenannten FR-A-1 573 762, bieten die besonders angeordneten und z.T. auch ausgestalteten Durchbohrungen dem Wärmeträger einen wesentlich größeren Durchtrittsquerschnitt. Hier wie dort können die Rohre in die für sich fertiggestellten und entsprechend fixierten Stützroste je nach Wunsch zeilen- oder kranzweise eingeführt werden.

Nachfolgend werden zwei gegenwärtig bevorzugte Ausführungsformen mit einigen Varianten anhand der Zeichnungen genauer beschrieben. Dabei zeigt
- Fig. 1: einen Ausschnitt einer Scheibe des Stützrostes in einer ersten Ausführungsform in Draufsicht,
- Fig. 2: einen ebensolchen Ausschnitt des fertiggestellten Stützrostes aus zwei Scheiben nach Fig. 1 in Draufsicht, wobei der Deutlichkeit halber die beiden Scheiben unterschiedlich schraffiert dargestellt sind und die obenliegende Scheibe transparent erscheint,
- Fig. 3: einen Ausschnitt einer Scheibe des Stützrostes in der zweiten Ausführungsform,
- Fig. 4: einen Ausschnitt des fertiggestellten Stützrostes aus zwei Scheiben nach Fig. 3 in einer Darstellungsweise entsprechend Fig. 2,
- Fig. 5: einen ausschnittsweisen Querschnitt durch einen Stützrost in der ersten Ausführungsform, jedoch mit einstückig miteinander verbundenen Scheiben,
- Fig. 6: einen Ausschnitt einer Scheibe des Stützrostes der ersten Ausführungsform, jedoch mit etwas abgewandelten Durchbohrungen und
- Fig. 7: einen Auschnitt einer Scheibe des Stützrostes der zweiten Ausführungsform mit etwas abgewandelten Durchbohrungen.

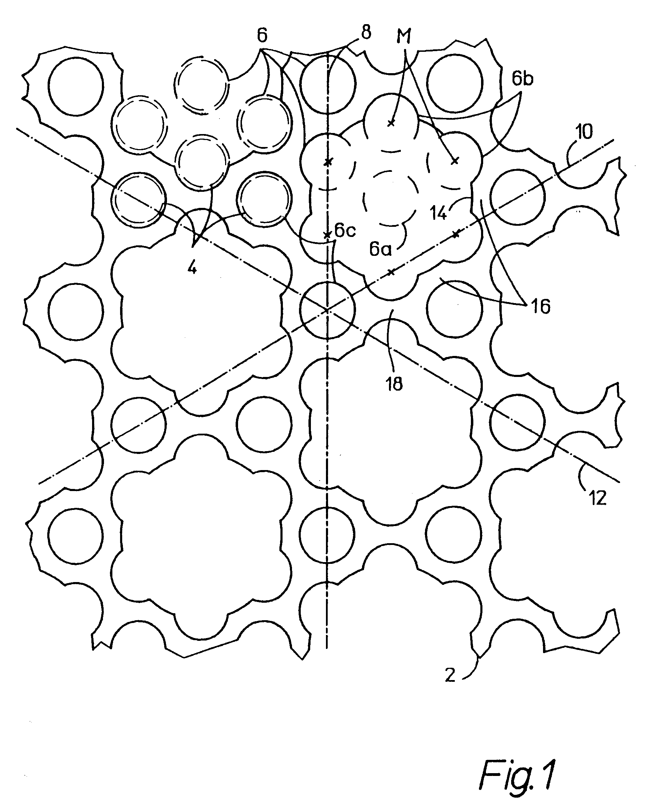

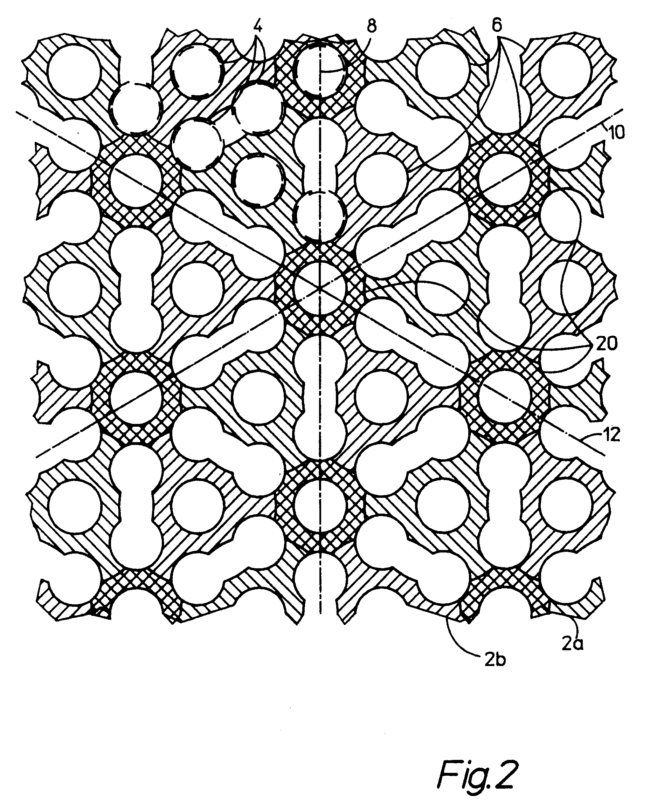

Die Ausführungsform nach den Figuren 1 und 2 findet bevorzugt bei verhältnismäßig dicht beieinandern angeordneten Rohren Anwendung, wo der Rohrabstand etwa die Hälfte des Rohrdurchmessers oder sogar weniger beträgt.

Fig. 1 zeigt eine Scheibe 2 eines solchen Stützrostes ausschnittsweise in Draufsicht, wobei auch einige wenige Rohre 4 andeutungsweise dargestellt sind. Wie ersichtlich, sind die Rohre 4 und demgemäß auch entsprechende Durchbohrungen 6 der Scheibe 2 in dem bei Rohrbündeln üblichen 60°-Teilungsmuster angeordnet, wie es durch die Linien 8, 10 und 12 symbolisiert wird, die die Lage der Hauptachsen des Rohrteilungsmusters angeben.

Betrachtet man die Rohrzeilen in Richtung einer beliebigen dieser Hauptachsen, etwa derjenigen, welche durch die Linie 8 angegeben wird, so erkennt man, daß in jeder dritten Zeile jede dritte der Durchbohrungen 6 (zur Unterscheidung mit 6a bezeichnet) in einem Maße konzentrisch erweitert ist, daß sie sich bis etwa zur Mitte M der ringsherumliegenden Durchbohrungen, 6b, fortsetzt, die dementsprechend nur noch teilweise erscheinen.

Genauer gesagt erstreckt sich die betreffende Erweiterung 14 so weit, daß sie bis in die Nähe der übernächsten darumliegenden Bohrungen, 6c, reicht, d.h. um diese herum noch eine geschlossene Wand 16 von einer Stärke bestehen läßt, die etwa gleich derjenigen des Steges 18 zwischen aufeinanderfolgenden Bohrungen 6 ist.

All die so beschaffenen Scheiben 2 der betreffenden Stützroste können kongruent aufeinanderliegend in einem einzigen Bohrprozeß hergestellt werden. Zur Bildung der Stützroste werden dann jeweils zwei solche Scheiben 2 seitenverkehrt mit einem gewissen Abstand, beispielsweise in der Größenordnung von einem Bohrungsdurchmesser, übereinandergelegt und auf irgendeine Weise miteinander verbunden, wobei sich in Draufsicht das Muster der Fig. 2 ergibt. Wie daraus erkennbar, werden damit sämtliche Rohre, ungeachtet der Erweiterungen 14, in jeweils einer der beiden Scheiben 2, jedenfalls auf dem überwiegenden Teil ihres Umfangs, von dem Stützrost eingeschlossen, wodurch die Rohre an ihrem Platz gehalten werden. Dennoch besitzt der Stützrost, und zwar im Bereich eines jeden Rohres, einen verhältnismäßig großen Durchtrittsquerschnitt, um einen drosselarmen Durchtritt des Wärmeträgers entlang der Rohrachse zu ermöglichen.

Es versteht sich, daß die in Fig. 2 schraffiert dargestellten beiden Scheiben 2 in dieser Figur nicht etwa geschnitten erscheinen. Die Schraffierungen dienen vielmehr nur der besseren Unterscheidung der beiden Scheiben 2, hier mit 2a und 2b bezeichnet, sowie zur Kenntlichmachung der einander überdeckenden Bereiche, wie z.B. 20 (wozu auch noch die obenliegende Scheibe, 2a, transparent dargestellt ist).

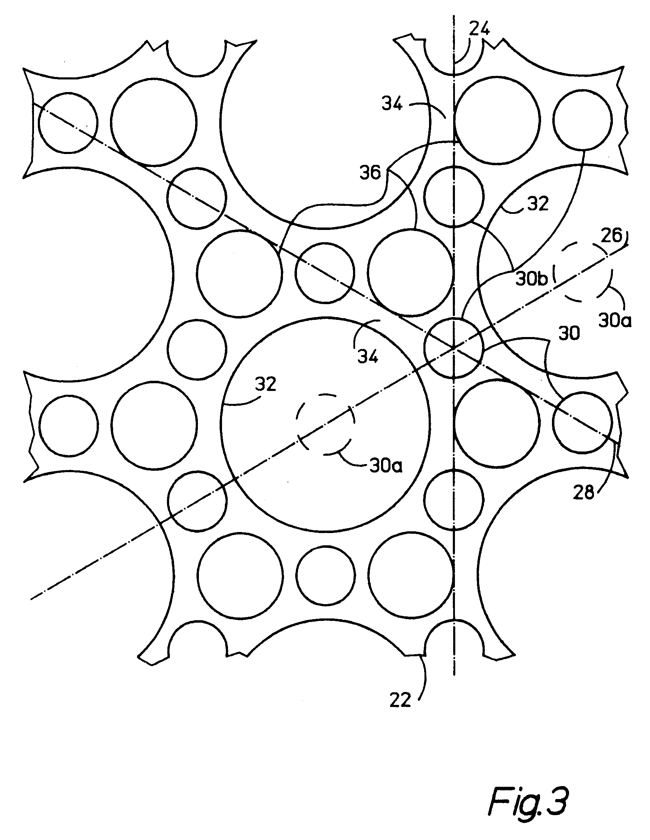

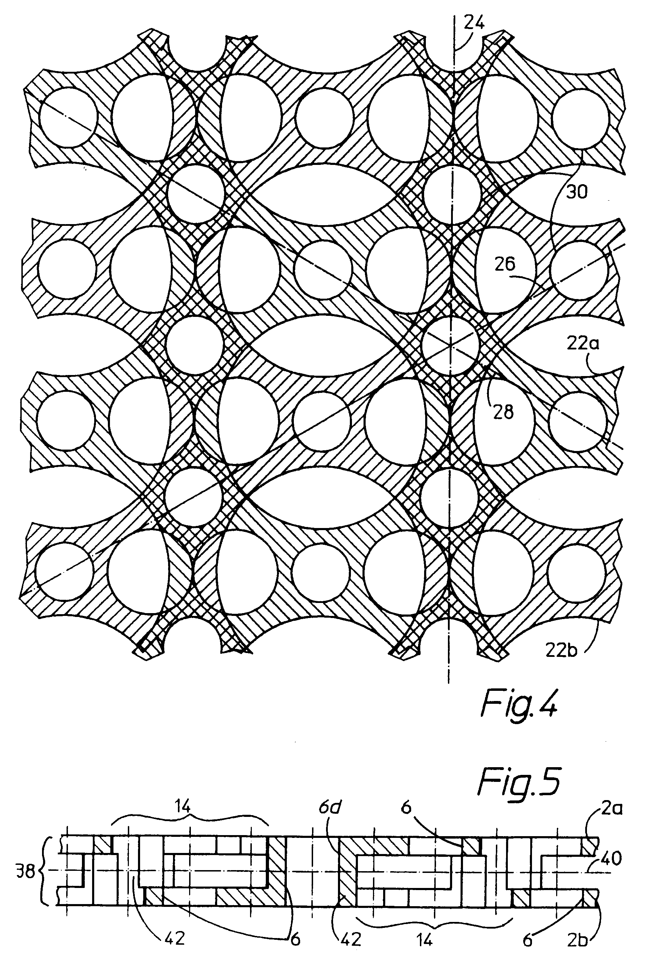

Die in den Figuren 3 und 4 dargestellte Ausführungsform ist in besonderem Maße für Rohrbündel mit verhältnismäßig weit auseinanderliegenden Rohren geeignet, indem sie, wie Fig. 4 erkennen läßt, einen besonders großen rohrachsnormalen Durchtrittsquerschnitt bestehen läßt. D.h. dieser Durchtrittsquerschnitt wäre auch dann noch vorhanden, wenn die beiden betreffenden Scheiben 22a und 22b unmittelbar aufeinanderlägen.

Wie aus Fig. 3 ersichtlich, wird eine jede der Scheiben 22a und 22b - fortan einheitlich mit 22 bezeichnet - dadurch erhalten, daß bei einem 60°-Rohrteilungsmuster in Richtung der Rohrteilungshauptachsen (Linien 24, 26 und 28) in jeder zweiten Zeile jede zweite der betreffenden Durchbohrungen 30, zur Unterscheidung mit 30a bezeichnet, bis in die Nähe der darum herumliegenden Durchbohrungen 30b konzentrisch erweitert wird. Die betreffenden Erweiterungen sind mit 32 bezeichnet. Da die dazwischenliegenden Stege 34 dazu noch Raum lassen, sind darin in der Mitte zwischen jeweils drei Durchbohrungen 30 und Erweitungen 32 weitere Durchbohrungen, 36, vorgesehen, um den Durchtrittsquerschnitt zu vergrößern.

Zwei - oder auch mehrere - der Scheiben 22 können nun wiederum seitenverkehrt mit Abstand übereinanderliegend miteinander verbunden werden, ähnlich wie dies mit den Scheiben 2 in dem zuerst beschriebenen Ausführungsbeispiel der Fall war, um den fertigen Stützrost nach Fig. 4 zu bilden.

In beiden Fällen können aber auch die jeweiligen Scheiben 2 bzw. 22 mittels einfacher Bohr- bzw. Fräsvorgänge zusammenhängend hergestellt werden, um auch fortan noch ein einstückiges Teil zu bilden. Ein solches Beispiel zeigt Fig. 5. Wie daraus erkennbar, kann der betreffende Stützrost dadurch erhalten werden, daß in einer einstückigen Platte 38 zunächst Durchbohrungen 6 für sämtliche Rohre eingebracht und sodann die jeweiligen Erweiterungen 14 durch Einfräsen abwechselnd von beiden Seiten her, jeweils über die Mittelebene 40 der Platte 38 hinaus, hergestellt werden. Die beiden so erhaltenen Scheiben 2a und 2b stehen weiterhin über Materialbereiche 42 miteinander in Verbindung, welche die den beiden Scheiben gemeinsamen geschlossenen, d.h. vollwandig bestehengebliebenen Durchbohrungen 6d umgeben.

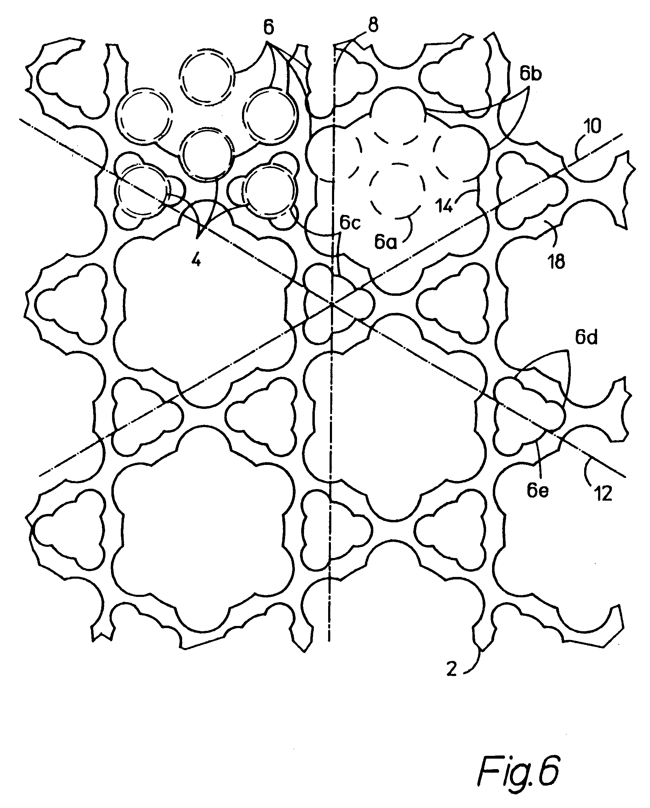

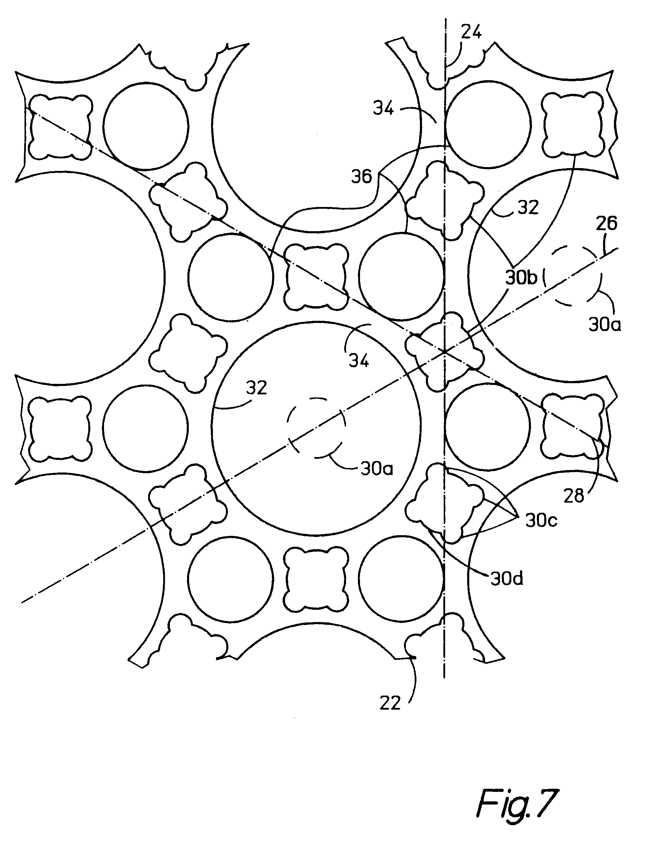

Die Figuren 6 und 7 zeigen noch, und zwar Fig. 6 für die Ausführungsform nach den Figuren 1 und 2 und Fig. 7 für die Ausführungsform nach den Figuren 3 und 4, eine Möglichkeit, den Durchtrittsquerschnitt des Stützrostes dadurch weiter zu vergrößern, daß die geschlossen bestehenbleibenden Durchbohrungen 6 bzw. 30 einer jeden Scheibe mit lappenförmigen Erweiterungen 6d bzw. 30c versehen werden, wie sie etwa durch einen Kranz vorher eingebrachter kleinerer Durchbohrungen erhalten werden, während die dazwischen bestehenbleibenden Bohrungswandabschnitte 6e bzw. 30d die Abstützung der Rohre übernehmen.

## Patentansprüche

1. Stützrost für Rohrbündel zur gegenseitigen wie auch gesamtheitlichen Abstützung der Rohre (4) gegen seitliche Ausbiegungen in bezug auf die Rohrachse und mit individuellen Durchtrittsöffnungen für die einzelnen Rohre, bestehend aus mindestens zwei normal zu der Rohrachse angeordneten, miteinander verbundenen Scheiben (2; 22), wobei die Durchtrittsöffnungen von Durchbohrungen (6; 30) der Scheiben gebildet werden und miteinander korrespondierende solche Durchbohrungen aufeinanderfolgender Scheiben gegeneinander versetzt auftreten und nur an begrenzten Rohrumfangsbereichen an den Rohren anzuliegen vermögen, dadurch ***gekennzeichnet***, daß die Scheiben (2; 22) mit gegenseitigem Abstand angeordnet sind, daß die Durchbohrungen (6; 30) einen dem Rohraußendurchmesser entsprechenden Durchmesser aufweisen und in einem gleichmäßigen 60°-Rohrteilungsmuster auftreten, jedoch, gesehen in Richtung einer der Rohrteilungshauptachsen (Linien 8, 10, 12; 24, 26, 28), in jeder n-ten Zeile jede n-te solche Durchbohrung bis in die Nähe der (n - 1)-ten darumherumliegenden Durchbohrungen (6; 30) konzentrisch erweitert ist, wobei n = 2 oder 3 ist und die betreffenden Erweiterungen (14; 30) aufeinanderfolgender Scheiben (2a, 2b; 22a, 22b) derart gegeneinander versetzt auftreten, daß eine solche Erweiterung der einen Scheibe koaxial mit einer geschlossen bestehengebliebenen Durchbohrung (6c; 30b) der anderen Scheibe angeordnet ist.

2. Stützrost nach Anspruch 1, **dadurch gekennzeichnet**, daß die Anzahl der miteinander verbundenen Scheiben (2; 22) 2 beträgt.

3. Stützrost nach Anspruch 1 oder 2, **dadurch gekennzeichnet**, daß die miteinander verbundenen Scheiben (2; 22) über zumindest eine Anzahl miteinander fluchtende geschlossen bestehengebliebene Durchbohrungen (6c; 30b) der Scheiben umgebende, den Scheibenabstand überbrückende Materialbereiche (42) einstückig miteinander verbunden sind.

4. Stützrost nach Anspruch 3, **dadurch gekennzeichnet**, daß die überbrückenden Materialbereiche (42) das Profil der die betreffenden miteinander fluchtenden Durchbohrungen (6c; 30b) umgebenden, einander überdeckenden Scheibenbereiche (20) aufweisen.

5. Stützrost nach einem der vorhergehenden Ansprüche, **dadurch gekennzeichnet**, daß zumindest die geschlossen bestehengebliebenen Durchbohrungen (6c; 30b) mit lappenartigen Erweiterungen (6d; 30c) versehen sind.

6. Stützrost nach einem der vorhergehenden Ansprüche, **dadurch gekennzeichnet**, daß die Stege (34) zwischen den geschlossen bestehengebliebenen Durchbohrungen (30b) einer jeden Scheibe (22), soweit festigkeitsmäßig tragbar, in Richtung der Bohrungsachsen zusätzliche Durchbrechungen (36) aufweisen.

## Claims

1. Supporting grid for tube bundles for the mutual and overall support of the tubes (4) against lateral bending with respect to the tube axis and with individual through-passage openings for the individual tubes, comprising at least two panels (2; 22) which are arranged perpendicularly with respect to the tube axis and are connected to one another, the through-passage openings being formed by through-bores (6; 30) of the panels and mutually corresponding through-bores of this type in successive panels being offset with respect to one another and being capable of butting against the tubes only on limited circumference regions thereof, characterized in that the panels (2; 22) are arranged at a mutual spacing, in that the through-bores (6; 30) are of a diameter corresponding to the external tube diameter and occur in a uniform 60° tube-distribution pattern, but, in every nth row, as seen in the direction of one of the main tube-distribution axes (lines 8, 10, 12; 24, 26, 28), every nth through-bore of this type is widened concentrically into the vicinity of the (n - 1)th through-bores (6; 30) located around it, where n = 2 or 3 and the relevant widenings (14; 30) of successive panels (2a, 2b; 22a, 22b) are offset with respect to one another such that such a widening of one panel is arranged coaxially with respect to a still-closed through-bore (6c; 30b) of the other panel.

2. Supporting grid according to Claim 1, characterized in that the number of panels (2; 22) connected to one another is 2.

3. Supporting grid according to Claim 1 or 2, characterized in that the panels (2; 22) connected to one another are connected to one another integrally via at least a number of material regions (42) which enclose mutually aligned, still-closed through-bores (6c; 30b) of the panels and span the spacing between the panels.

4. Supporting grid according to Claim 3, characterized in that the spanning material regions (42) have the profile of the mutually overlapping panel regions (20) which enclose the relevant mutually aligned through-bores (6c; 30b).

5. Supporting grid according to one of the preceding claims, characterized in that at least the still-closed through-bores (6c; 30b) are provided with lug-like widenings (6d; 30c).

6. Supporting grid according to one of the preceding claims, characterized in that, as far as it is acceptable in strength terms, the webs (34) between the still-closed through-bores (30b) of each panel (22) have additional through-passages (36) in the direction of the bore axes.

## Revendications

1. Grille de support pour faisceaux de tubes pour supporter les tubes (4) les uns par rapport aux autres et en commun en vue d'éviter un fléchissement latéral par rapport à l'axe des tubes, cette grille présentant des ouvertures individuelles pour le passage des différents tubes, et comportant au moins deux disques (2; 22) reliés entre eux et disposés perpendiculairement à l'axe des tubes, les ouvertures de passage étant formées dans les disques par des alésages traversants (6; 30), de tel alésages de disques successifs, qui correspondent entre eux, étant décalés entre eux et pouvant venir en contact avec les tubes seulement sur des régions limitées de la périphérie du tube,
caractérisée en ce que les disques (2; 22) sont espacés d'un certain intervalle, que les alésages traversants (6; 30) ont un diamètre correspondant an diamètre extérieur du tube et sont répartis selon un motif de partage régulier des tubes de 60°, mais que, vu dans la direction de l'un des axes principaux de partage des tubes (lignes 8, 10, 12 ; 24, 26, 28), dans chaque nième rangée, chaque nième alésage traversant est élargi concentriquement jusqu'au voisinage des alésages (n-1) (6; 30) situés autour, n étant égal à 2 ou 3, et les élargissements (14, 30) de disques successifs (2a, 2b; 22a, 22b) étant décalés entre eux de manière à ce qu'un tel élargissement de l'un des disques soit agencé coaxialement à un alésage restant fermé (6c; 30b) de l'autre disque.

2. Grille de support selon la revendication 1,
caractérisée en ce que le nombre de disques (2; 22) reliés entre eux est de deux.

3. Grille de support selon la revendication 1 ou 2,
caractérisée en ce que les disques (2; 22) reliés entre eux sont solidarisés entre eux par eu moins un certain nombre d'étendues de matière (42) entourent des alésages traversants alignés et restant fermés (6c;, 30b) des disques, et comblant la distance entre lesdits disques.

4. Grille de support selon la revendication 3,
caractérisée en ce que les étendues de matière (42) ont le profil des régions de disque (20) qui se chevauchent et entourent les alésages alignés correspondants (6a; 30b).

5. Grille de support selon l'une des revendications précédentes,
caractérisée en ce qu'au moins les alésages restent fermés (6c; 30b) sont munis d'élargissements (6d, 30c) en forme de pattes.

6. Grille de support selon l'une des revendications précédentes,
caractérisée en ce que les nervures (34) présentent entre les alésages restent fermés (30b) de chaque disque (22), dans le mesure où le solidité n'en est pas affectée, des alésages traversants supplémentaires (36) dans le direction des axes d'alésage.
